# FASCICULE DE BREVET EUROPEEN

(11) **EP 3 621 840 B1**
(45) Date de publication et mention de la délivrance du brevet: **27.04.2022**
(21) Numéro de dépôt: 18737829.4
(22) Date de dépôt: 26.06.2018
(51) Int. Cl.: B60K 11/08, B60K 11/04, F01P 3/18

(54) **DISPOSITIF DE REGULATION D'UN FLUX D'AIR POUR UNE ENTREE D'AIR D'UN VEHICULE AUTOMOBILE**
LUFTSTRÖMUNGSREGULIEREINRICHTUNG FÜR EINEN LUFTEINLASS EINES KRAFTFAHRZEUGS
AIR FLOW REGULATION DEVICE FOR AN AIR INLET OF A MOTOR VEHICLE

(30) Priorité: 30.06.2017 FR 1756197
(43) Date de publication de la demande: 18.03.2020
(73) Titulaire: Valeo Systemes Thermiques, 78322 Le Mesnil Saint-Denis Cedex (FR)
(72) Inventeur: HERLEM, Jean-Paul, 78322 Le Mesnil Saint Denis Cedex (FR); ANDRE, Stephan, 78322 Le Mesnil Saint Denis Cedex (FR); HENON, Emmanuel, 78322 Le Mesnil Saint Denis Cedex (FR)
(74) Mandataire: Valeo Systèmes Thermiques
(86) Numéro de dépôt international: PCT/EP2018/067101
(87) Numéro de publication internationale: WO 2019/002287

(56) Documents cités:
- EP-A1- 1 473 449
- EP-A1- 2 942 220
- DE-A1-102007 024 746
- FR-A1- 2 788 019
- FR-A1- 2 964 926
- US-A1- 2012 292 122
- US-A1- 2014 251 241

## Description

L'invention a pour objet un dispositif de régulation d'un flux d'air pour une entrée d'air d'un véhicule automobile et plus précisément ainsi qu'un véhicule automobile, et notamment un véhicule automobile électrique comprenant un tel dispositif de régulation d'entrée d'air.

De manière générale, un véhicule automobile comprend une entrée d'air se présentant sous la forme d'une ouverture située sur la face avant dudit véhicule automobile. L'air entrant est utilisé pour permettre un échange de chaleur entre celui-ci et le système de refroidissement du véhicule automobile, ledit système de refroidissement étant situé à proximité de la face avant dudit véhicule. Plus précisément, l'air qui pénètre dans le compartiment moteur du véhicule automobile est guidé vers le système de refroidissement dudit véhicule automobile pour permettre un échange thermique entre l'air entrant et l'échangeur de chaleur du système de refroidissement. Il est important de minimiser les déperditions du flux d'air entre l'entrée d'air et l'échangeur de chaleur. En effet, tout flux d'air pénétrant à l'intérieur du véhicule, et s'échappant vers le compartiment moteur avant d'avoir contribué à l'échange de chaleur à l'intérieur du véhicule automobile, influence de manière négative le coefficient de résistance à l'air dudit véhicule automobile.

Il est connu d'utiliser des guides d'air se présentant sous la forme d'une gaine généralement en plastique ou autre matériau flexible reliant l'entrée d'air au système de refroidissement.

Dans le cadre d'un véhicule électrique, le dispositif de régulation d'entrée d'air peut comprendre un conduit d'air agencé en aval du système de refroidissement et conçu pour guider le flux d'air vers l'extérieur du véhicule. Un tel conduit peut s'avérer avantageux pour générer un effet venturi en aval de l'unité de refroidissement de sorte qu'un plus grand débit d'air puisse passer au travers du système de refroidissement améliorant ainsi le rendement thermique.

Un tel conduit présente cependant certains inconvénients. En effet, lors qu'un véhicule électrique est à l'arrêt et branché à une station, ou borne électrique, afin de recharger la batterie, le groupe moto ventilateur du système de refroidissement est activé afin d'assurer un refroidissement de la batterie et éviter que celle-ci ne surchauffe. Toutefois un tel fonctionnement génère des nuisances sonores pour l'utilisateur.

Des autres dispositifs de régulation d'un flux d'air sont connus des documents US 2012/292122 A1, FR 2 964 926 A1, EP 2 942 220 A1 et DE 10 2007 024 746 A1.

La présente invention cherche à surmonter cet inconvénient et propose un dispositif de régulation d'un flux d'air selon la revendication 1.

Le volet permet d'obturer le canal d'écoulement et notamment le conduit menant le flux d'air vers l'extérieur du véhicule. Les nuisances sonores ainsi générées lors du rechargement de la batterie sont contenues à l'intérieur du véhicule et ne peuvent plus être perçues à l'extérieur du véhicule.

D'autres modes de réalisation du dispositif de régulation d'entrée d'air pris isolément ou en combinaison proposent que :
- le volet est de type tambour ou coulissant;
- un dispositif d'obturation comprenant un ensemble de volets d'obturation aptes à pivoter en rotation de manière à faire varier le débit de flux d'air, est agencé dans le canal d'écoulement en amont de l'unité de refroidissement par rapport à l'écoulement du flux d'air ;

- l'unité de refroidissement est inclinée par rapport au dispositif d'obturation ;
- des aubes sont agencées en amont et/ou en aval de l'unité de refroidissement par rapport à l'écoulement du flux d'air ;
- les aubes s'étendent du dispositif d'obturation jusqu'à l'unité de refroidissement ;
- la section de passage du canal d'écoulement s'agrandit depuis l'entrée jusqu'à l'unité de refroidissement et rétrécit depuis l'unité de refroidissement jusqu'à la sortie.

L'invention concerne également un véhicule comprenant un tel dispositif de régulation d'un flux d'air pour une entrée d'air selon l'invention.

D'autres modes de réalisation du véhicule pris isolément ou en combinaison proposent que :
- le véhicule comprend une entrée d'air, éventuellement dotée d'une calandre, la sortie du canal d'écoulement comprend un conduit de débourrage agencé pour mener le flux d'air vers l'extérieur du véhicule et un conduit de refroidissement agencé pour mener le flux d'air vers le compartiment moteur du véhicule ;
- le véhicule comprend en outre une entrée d'air additionnelle et un conduit additionnel reliant ladite entrée additionnelle au conduit de débourrage.

D'autres caractéristiques et avantages de l'invention apparaîtront à la lecture de la description qui va suivre. Celle-ci est purement illustrative et doit être lue en regard des dessins annexés sur lesquels :
- la figure 1 illustre un dispositif de régulation d'un flux d'air selon l'invention selon une vue de profil,
- la figure 2 illustre une coupe du dispositif de régulation d'un flux d'air de la figure 1 selon une vue de profil,
- la figure 3 illustre une partie du dispositif de régulation d'un flux d'air selon une vue en perspective,
- la figure 4 illustre de manière schématique un véhicule selon l'invention selon une vue de profil.

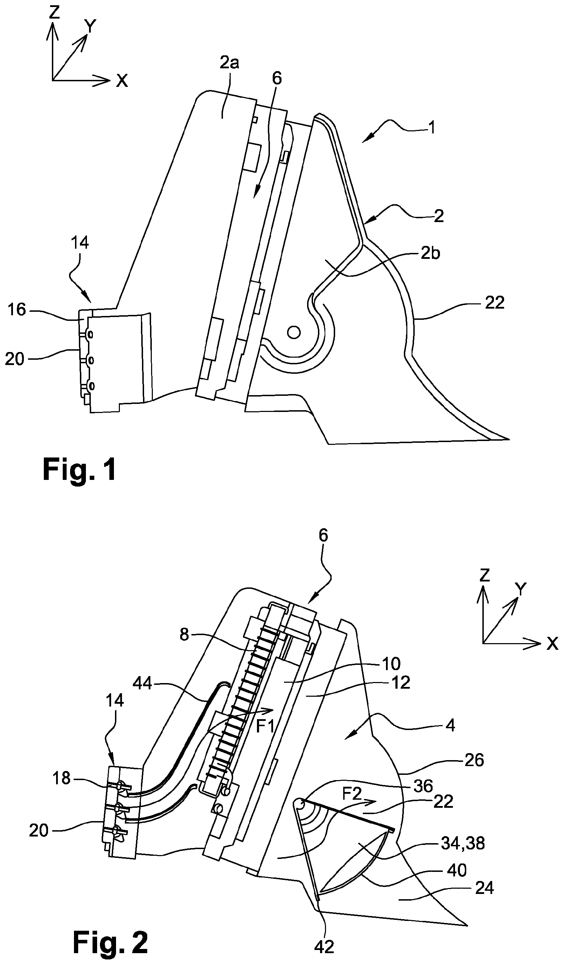

La figure 1 illustre le dispositif de régulation 1 d'un flux d'air pour une entrée d'air d'un véhicule automobile selon l'invention. Le dispositif de régulation 1 s'étend selon une direction longitudinale (X), transversale (Y) et verticale (Z), par exemple par rapport aux axes du véhicule, comme représenté par les axes sur les figures 1, 2 et 4.

Le dispositif de régulation 1 d'un flux d'air selon l'invention comprend une gaine 2 correspondant à une enveloppe, ou encore un boîtier, définissant ainsi un canal d'écoulement 4 avec une entrée 20 et une sortie 22 dans lequel s'écoule un flux d'air. La gaine 2 est réalisé en matériau flexible afin d'absorber les vibrations du véhicule lorsque celui-ci roule, et en matériau suffisamment résistant afin de porter des éléments tels que des échangeurs de chaleur, certains plastiques par exemple en polypropylène ou en polyamide-6 se prêtent à une telle utilisation.

Le dispositif de régulation 1 d'un flux d'air selon l'invention comprend en outre une unité de refroidissement 6. L'unité de refroidissement 6 comprend au moins un échangeur de chaleur destiné à permettre un échange thermique entre le flux d'air et le fluide circulant au sein de l'échangeur de chaleur. Telle qu'illustrée en figure 2, l'unité de refroidissement 6 comprend ici un premier et un second échangeur de chaleur 8, 10. Le premier échangeur de chaleur 8 correspond par exemple à un condenseur tandis que le second échangeur de chaleur 10 correspond par exemple à un radiateur. L'unité de refroidissement 6 comprend en outre un groupe moto-ventilateur 12 correspondant à un ventilateur avec des pâles et un moteur associé de manière à pouvoir aspirer et relâcher un flux d'air à travers le dispositif de régulation 1, et ce même lorsque le véhicule est à l'arrêt.

Le dispositif de régulation 1 d'un flux d'air selon l'invention comprend en outre un dispositif d'obturation 14 comprenant un ensemble de volets d'obturation 18 aptes à pivoter en rotation de manière à faire varier le débit du flux d'air, ledit dispositif d'obturation 14 est agencé dans le canal d'écoulement 4 en amont de l'unité de refroidissement 6 par rapport à l'écoulement du flux d'air. Le dispositif d'obturation 14 comprend en outre un cadre support 16 présentant des paliers de manière à porter les volets d'obturation 18.

Chaque volet d'obturation 18 comprend un axe de rotation se matérialisant par un tourillon qui est inséré dans les paliers du cadre support 16. Les axes de rotation permettent aux volets d'obturation 18 de passer d'une configuration d'ouverture à une configuration de fermeture. La configuration d'ouverture, ou autrement dit ouvrir un volet d'obturation 18, revient à placer (par rotation) les volets d'obturation 18 de manière à ce qu'ils s'opposent le moins possible au passage du flux d'air tout en l'orientant de manière appropriée. Comme illustré sur la figure 2, dans la configuration d'ouverture, les volets d'obturation 18 sont agencés dans une position horizontale, en d'autres termes ils s'étendent selon une direction longitudinale (X) et transversale (Y), et assurent ainsi que le débit pour le flux d'air soit maximal, l'entrée 20 d'air étant dégagée. La configuration de fermeture, ou autrement dit fermer un volet d'obturation 18, revient à placer les volets d'obturation 18 de manière à ce qu'ils s'opposent par leur surface frontale au maximum à l'écoulement du flux d'air F, en coopération avec les autres volets d'obturation 18. Dans cette configuration, les volets d'obturation 18 sont agencés dans une position verticale, autrement dit ils s'étendent selon une direction transversale (Y) et verticale (Z), et assurent ainsi que le débit pour le flux d'air soit minimal voire nul, l'entrée 20 d'air étant obturée. Bien évidement, les volets d'obturation 18 sont aptes à adopter toute position intermédiaire entre ces deux configurations.

La gaine 2 telle qu'illustrée en figure 1, est réalisée en deux parties, une première partie 2a reliant l'entrée de la gaine 2, et donc l'entrée 20 du canal découlement 4, où est agencée le dispositif d'obturation 14, à l'unité de refroidissement 6 et une deuxième partie 2b reliant l'unité de refroidissement 6 à la sortie de la gaine 2 et donc à la sortie 22 du canal d'écoulement 4. Les parties 2a, 2b de la gaine comprennent des moyens de fixation tels que des clips, vis, trous taraudés, etc. de formes complémentaires aux moyens de fixation agencés sur l'unité de refroidissement 6. Les parties 2a,2b peuvent aussi comprendre des moyens de fixation de formes complémentaires de manière à ce que chaque partie 2a,2b puisse se fixer l'une à l'autre. Il est également envisageable d'avoir une gaine 2 en une seule pièce monobloc formant continuité de matière entre l'entrée 20 et la sortie 22 du canal d'écoulement 4.

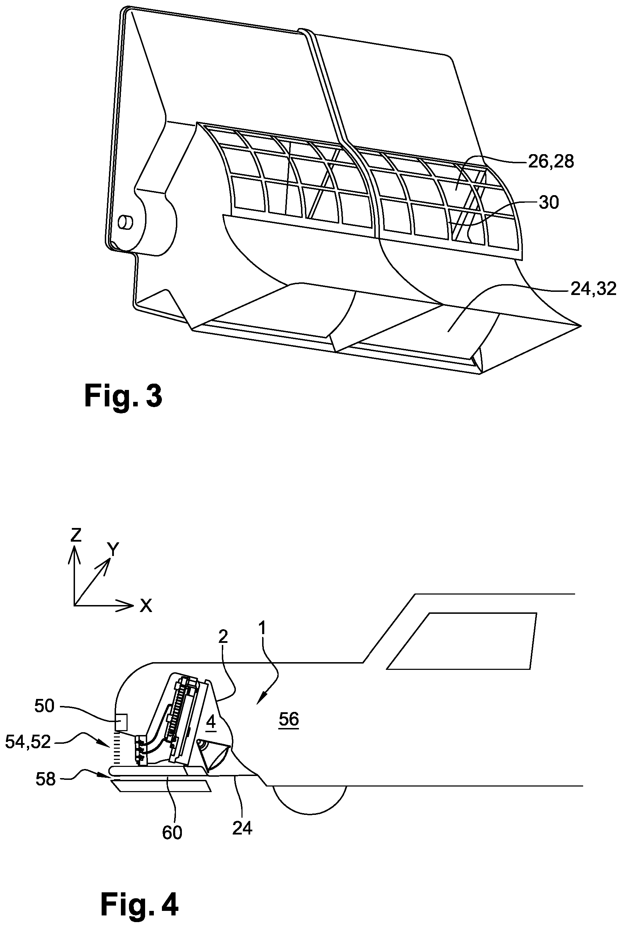

Le canal d'écoulement 4 comprend une entrée 20 et une sortie 22 cette dernière est composée d'au moins deux conduits distincts, le volet qui sera décrit ultérieurement étant apte à obturer chacun desdits conduits. La sortie 22 du canal d'écoulement 4 comprend un conduit de débourrage 24 agencé pour guider le flux d'air vers l'extérieur du véhicule et un conduit de refroidissement 26 agencé pour guider le flux d'air vers le compartiment moteur du véhicule. Comme illustré sur la figure 3, le conduit de refroidissement 26 correspond ici un canal où une ouverture 28 dotée d'une grille 30 est réalisée au sein d'une paroi de la gaine 2 permettant ainsi au flux d'air de s'écouler du canal d'écoulement 4 vers le compartiment moteur. Le conduit de débourrage 24 correspond ici à un canal où une ouverture 32 est réalisée au sein d'une paroi de la gaine 2 permettant ainsi au flux d'air de s'écouler du canal d'écoulement 4 vers l'extérieur du véhicule.

Le dispositif de régulation 1 d'un flux d'air selon l'invention comprend en outre comprend un volet 34 agencé au sein du canal d'écoulement 4 en aval de l'unité de refroidissement 6 par rapport à l'écoulement du flux d'air. Le volet 34 est de type tambour comme illustré sur la figure 2 car, étant donné qu'un tel dispositif de régulation s'étend sur une grande partie de la largeur du véhicule (Axe Y) pendant ainsi atteindre plus d'un mètre, le volet tambour, de par sa structure qui présente une meilleure résistance mécanique, est mieux adapté pour un tel usage. D'autres volets peuvent être envisageables tels qu'un volet coulissant (également connu sous l'appellation anglaise sliding door) comprenant une porte coulissante sur laquelle est agencée au moins une crémaillère et un engrenage complémentaire à la crémaillère mis en rotation autour d'un axe par un actionneur afin de mettre ce volet en mouvement, notamment selon un mouvement de translation, selon un mode de réalisation non illustré.

Le volet 34 tambour comprend un axe de rotation 36 sous la forme d'un arbre permettant le pivotement du volet 34. Le volet 34 tambour comprend en outre trois parois pleines. Deux parois latérales 38 agencées aux deux extrémités opposées de l'axe de rotation 36, ces deux parois latérales 38 sont parallèles et s'inscrivent dans un plan défini par les axes XZ perpendiculaire à l'axe de rotation 36, et une paroi transversale 40 reliant les parois latérales l'unes à l'autre. La paroi transversale 40 s'inscrit dans un plan défini par les axes XZ de forme galbée permet l'écoulement ou le tarissement du flux d'air dans un conduit 24,26 de sortie 22 du canal d'écoulement 4 selon son positionnement. Le volume entre les parois latérales 38, la paroi transversale 40 et l'axe de rotation 36 est inoccupé si bien que le flux d'air est apte à passer entre ces éléments comme illustré par la flèche F2 sur la figure 2.

La paroi transversale 40 du volet 34 tambour est apte à obturer le conduit de débourrage 24 comme illustré sur la figure 2. La paroi transversale 40 du volet 34 tambour est également apte à obturer le conduit de refroidissement 26 selon un mode de réalisation non illustré.

Les différentes parois du volet 34 épousent la forme des parois de la gaine 2 de manière à assurer une bonne étanchéité, le volet 34 peut également comprendre en outre des lèvres 42 en élastomère surmoulées aux extrémités des parois. Ainsi la paroi de la gaine 2 où est agencé le canal de refroidissement 26 est de forme sensiblement arrondie, de manière à ce que la paroi transversale 40 de forme galbée du volet 34 puisse obturer intégralement ce conduit de sortie.

Lorsque le véhicule est en train de rouler, le volet 34 est agencé de manière à obturer le conduit de refroidissement 26, le flux d'air passant donc par le conduit de débourrage 24. Lorsque le véhicule est en stationnement à une borne (la batterie étant en train d'être rechargée), le volet 34 est agencé de manière à obturer le conduit de débourrage 24 conduit de refroidissement 26, le flux d'air passant donc par le conduit de refroidissement 26 comme illustré sur la figure 2. Le volet 34 est apte à adopter toute position intermédiaire.

Toujours selon l'invention, l'unité de refroidissement 6 est inclinée par rapport au dispositif d'obturation 14. En d'autres termes, les plans médians de l'unité de refroidissement 6 et du dispositif d'obturation 14 forment un angle différent de 0° (non nul), en particulier un angle compris dans un écart entre 10 et 80°, plus précisément dans un écart entre 30° et 60°. Un tel agencement permet de diminuer l'encombrement stérique du dispositif de régulation 1.

Toujours selon l'invention, il peut s'avérer avantageux que des aubes 44 soient agencées en amont et/ou en aval de l'unité de refroidissement 6 par rapport à l'écoulement du flux d'air. Les aubes 44 correspondent à des guides d'air sous forme de parois aux formes arrondies définissant des couloirs pour le flux d'air afin de répartir le flux d'air F1 (figure 2) sur l'intégralité de la surface des échangeurs de chaleur 8, 10 de l'unité de refroidissement 6, il en résulte un meilleur rendement thermique.

Afin d'améliorer ce rendement thermique, il s'avère bénéfique que les aubes 44 s'étendent du dispositif d'obturation 14 jusqu'à l'unité de refroidissement 6. Les aubes 44 peuvent par exemple prolonger la continuité des volets d'obturation 18 du dispositif d'obturation 14 lorsqu'ils sont en configuration d'ouverture. Les aubes 44 peuvent également avoir une forme générale en S avec un bord d'attaque correspondant à une extrémité de l'aube s'étendant dans un plan horizontal définit par les axes X et Y, un bord de fuite sensiblement parallèle au bord d'attaque toutefois à une hauteur (Z) différente et un tronçon incliné ou rampe reliant le bord d'attaque et le bord de fuite qui s'étend principalement selon un axe vertical (Z). L'invention ne se limite pas à la forme des aubes 44 tant qu'elles servent de guide pour le flux d'air, les aubes 44 peuvent par exemple être en forme de quart de cercle.

La première partie plane extrémale de l'aube 44 destinée à être traversée par le flux d'air F1 correspond au bord d'attaque et est plane. La seconde et dernière partie plane extrémale destinée à être traversée par le flux d'air F1 correspond au bord de fuite est également plane. Le tronçon incliné ne fait pas partie des bords d'attaque et de fuite.

Les aubes 44 s'étendent entre le dispositif d'obturation 14 jusqu'à l'unité de refroidissement 6 sans pour autant être en contact avec ces éléments. Afin de mieux guider l'air, les bords d'attaque et de fuite des aubes 44 sont agencés à proximité respective du dispositif d'obturation 14 et de l'unité de refroidissement 6, sans pour autant être en butée contre ces éléments.

Toujours selon l'invention, la section de passage du canal d'écoulement 4 s'agrandit depuis l'entrée 20 du canal d'écoulement 4 jusqu'à l'unité de refroidissement 6 et rétrécit depuis l'unité de refroidissement 6 jusqu'à la sortie 22 du canal d'écoulement 4 selon le sens d'écoulement du flux d'air. Autrement dit, la section de passage du canal d'écoulement 4 a au moins une dimension (largeur et/ou hauteur) qui augmente au fur et à mesure de la longueur, ou au fur et à mesure que l'on se rapproche de l'unité de refroidissement 6 en partant de l'entrée 20, selon le sens d'écoulement du flux d'air. De manière analogue, la section de passage du canal d'écoulement 4 a au moins une dimension (largeur et/ou hauteur) qui diminue au fur et à mesure de la longueur, ou au fur et à mesure que l'on s'éloigne de l'unité de refroidissement 6 en se rapprochant de la sortie 22, selon le sens d'écoulement du flux d'air.

Toujours selon l'invention, des pièces d'absorption acoustique peuvent être agencé au sein de la gaine 2 assurant ainsi un revêtement isolant acoustique du canal d'écoulement 4 en supprimant ou limitant la propagation de bruit vers l'extérieur. La pièce d'absorption acoustique peut par exemple correspondre à une couche de mousse en polyuréthanne qui possède des pores ouverts ou fermés et préférentiellement imprégnée par un copolymère de vinylidène, ou encore à une cavité fonctionnant comme un résonateur d'Helmholtz.

La figure 4 illustre une coupe verticale d'un véhicule automobile selon une direction longitudinale du véhicule. Le véhicule comprend une poutre de pare-chocs 50 en dessous de laquelle est placée une calandre 52 ou grille. Cette calandre 52 est fixe et reste en position ouverte pour laisser passer un flux d'air entrant. Le véhicule selon l'invention comprend un dispositif 1 de régulation d'entrée d'air tel que décrit ci-dessus.

Le véhicule automobile selon l'invention comprend donc une entrée d'air 54 dotée d'une calandre 52 et un dispositif de régulation 1 de cette entrée d'air. La sortie 22 du canal d'écoulement 4 comprend un conduit de débourrage 24 agencé pour mener le flux d'air vers l'extérieur du véhicule et un conduit de refroidissement 26 agencé pour mener le flux d'air vers le compartiment moteur 56 du véhicule.

Le véhicule selon l'invention comprend en outre une entrée additionnelle 58 ainsi qu'un conduit additionnel 60 reliant ladite entrée additionnelle 58 avec le conduit de débourrage 24 menant le flux d'air vers l'extérieur du véhicule. Ceci permet d'accentuer l'effet venturi du conduit de débourrage 24 augmentant ainsi le débit d'air circulant améliorant ainsi le rendement thermique. L'entrée additionnelle 58 peut également être dotée d'une grille afin d'éviter tout corps étranger (branches, feuilles,...) de pénétrer au sein du conduit additionnel 60.

Il doit être bien entendu toutefois que ces exemples de réalisation sont donnés à titre d'illustration de l'objet de l'invention. L'invention n'est pas limitée à ces modes de réalisation décrits précédemment et englobe diverses modifications que pourra envisager l'homme du métier dans le cadre de la présente invention qui est défini par les revendications.

## Revendications

1. Dispositif de régulation (1) d'un flux d'air pour une entrée d'air d'un véhicule automobile, comprenant une gaine (2) définissant un canal d'écoulement (4) où s'écoule un flux d'air, dans lequel est agencé une unité de refroidissement (6) comprenant au moins un échangeur de chaleur (8,10) et un groupe moto-ventilateur (12), le dispositif de régulation (1) comprenant un volet (34) agencé au sein du canal d'écoulement (4) en aval de l'unité de refroidissement (6) par rapport à l'écoulement du flux d'air, le canal d'écoulement (4) comprenant une entrée (20) et une sortie (22), la dite sortie (22) étant composée d'au moins deux conduits (24,26) distincts, **caractérisé en ce que** le volet (34) est apte à obturer chacun desdits conduits (24,26).

2. Dispositif de régulation (1) selon la revendication 1, dans lequel le volet (34) est de type tambour ou coulissant.

3. Dispositif de régulation (1) selon l'une des revendications précédentes, dans lequel un dispositif d'obturation (14) comprenant un ensemble de volets d'obturation (18) aptes à pivoter en rotation de manière à faire varier le débit de flux d'air, est agencé dans le canal d'écoulement (4) en amont de l'unité de refroidissement (6) par rapport à l'écoulement du flux d'air.

4. Dispositif de régulation (1) selon la revendication 3, dans lequel l'unité de refroidissement (6) est inclinée par rapport au dispositif d'obturation (14).

5. Dispositif de régulation (1) selon l'une des revendications précédentes, dans lequel des aubes (44) sont agencées en amont et/ou en aval de l'unité de refroidissement (6) par rapport à l'écoulement du flux d'air.

6. Dispositif de régulation (1) selon la revendication 5 prise en combinaison avec la revendication 3, dans lequel les aubes (44) s'étendent du dispositif d'obturation (14) jusqu'à l'unité de refroidissement (6).

7. Dispositif de régulation (1) selon l'une des revendications précédentes, dans lequel la section de passage du canal d'écoulement (4) s'agrandit depuis l'entrée (20) jusqu'à l'unité de refroidissement (6) et rétrécit depuis l'unité de refroidissement (6) jusqu'à la sortie (22).

8. Véhicule automobile comprenant une entrée d'air (54) et un dispositif de régulation (1) pour ladite entrée d'air (54) selon l'une des revendications 1 à 7, **caractérisé en ce que** la sortie (22) du canal d'écoulement (4) comprend un conduit de débourrage (24) agencé pour mener le flux d'air vers l'extérieur du véhicule et un conduit de refroidissement (26) agencé pour mener le flux d'air vers le compartiment moteur (56) du véhicule.

9. Véhicule automobile selon la revendication 8, comprenant en outre une entrée d'air additionnelle (58), et dans lequel un conduit additionnel (60) relie ladite entrée additionnelle (58) au conduit de débourrage (24).

## Patentansprüche

1. Reguliereinrichtung (1) für einen Luftstrom für einen Lufteinlass eines Kraftfahrzeugs, welche eine Hülle (2) umfasst, die einen Strömungskanal (4), wo ein Luftstrom fließt, definiert, in welchem eine Kühleinheit (6) angeordnet ist, die mindestens einen Wärmetauscher (8, 10) und eine Gebläseeinheit (12) umfasst, wobei die Reguliereinrichtung (1) eine Klappe (34) umfasst, die innerhalb des Strömungskanals (4) stromabwärts der Kühleinheit (6), bezogen auf die Strömungsrichtung des Luftstroms, angeordnet ist, wobei der Strömungskanal (4) einen Einlass (20) und einen Auslass (22) umfasst, wobei der Auslass (22) aus mindestens zwei verschiedenen Kanälen (24, 26) besteht, **dadurch gekennzeichnet, dass** die Klappe (34) geeignet ist, jeden der Kanäle (24, 26) zu verschließen.

2. Reguliereinrichtung (1) nach Anspruch 1, wobei die Klappe (34) eine Trommelklappe oder Schiebeklappe ist.

3. Reguliereinrichtung (1) nach einem der vorhergehenden Ansprüche, wobei eine Verschlussvorrichtung (14), die eine Anordnung von Verschlussklappen (18) umfasst, die geeignet sind, durch Drehung zu schwenken, um so eine Änderung des Luftstromdurchflusses zu bewirken, im Strömungskanal (4) stromaufwärts der Kühleinheit (6), bezogen auf die Strömungsrichtung des Luftstroms, angeordnet ist.

4. Reguliereinrichtung (1) nach Anspruch 3, wobei die Kühleinheit (6) bezüglich der Verschlussvorrichtung (14) geneigt ist.

5. Reguliereinrichtung (1) nach einem der vorhergehenden Ansprüche, wobei Schaufeln (44) stromaufwärts und/oder stromabwärts der Kühleinheit (6), bezogen auf die Strömungsrichtung des Luftstroms, angeordnet sind.

6. Reguliereinrichtung (1) nach Anspruch 5 in Verbindung mit Anspruch 3, wobei sich die Schaufeln (44) von der Verschlussvorrichtung (14) bis zur Kühleinheit (6) erstrecken.

7. Reguliereinrichtung (1) nach einem der vorhergehenden Ansprüche, wobei sich der Durchflussquerschnitt des Strömungskanals (4) vom Einlass (20) bis zur Kühleinheit (6) vergrößert und von der Kühleinheit (6) bis zum Auslass (22) verengt.

8. Kraftfahrzeug, welches einen Lufteinlass (54) und eine Reguliereinrichtung (1) für den Lufteinlass (54) nach einem der Ansprüche 1 bis 7 umfasst, **dadurch gekennzeichnet, dass** der Auslass (22) des Strömungskanals (4) einen Reinigungskanal (24), der dafür eingerichtet ist, den Luftstrom zur Außenseite des Fahrzeugs zu leiten, und einen Kühlkanal (26), der dafür ausgelegt ist, den Luftstrom zum Motorraum (56) des Fahrzeugs zu leiten, umfasst.

9. Kraftfahrzeug nach Anspruch 8, welches außerdem einen zusätzlichen Lufteinlass (58) umfasst und bei dem ein zusätzlicher Kanal (60) den zusätzlichen Einlass (58) mit dem Reinigungskanal (24) verbindet.

## Claims

1. Device (1) for regulating an air stream for an air inlet of a motor vehicle, comprising a housing (2) defining a flow duct (4) in which there flows an air stream, in which a cooling unit (6) comprising at least one heat exchanger (8, 10) and a motor-fan unit (12) is arranged, the regulating device (1) comprising a flap (34) arranged within the flow duct (4) downstream of the cooling unit (6) relative to the flow of the air stream, the flow duct (4) comprising an inlet (20) and an outlet (22), said outlet (22) being made up of at least two separate ducts (24, 26), **characterized in that** the flap (34) is capable of shutting off each of said ducts (24, 26) .

2. Regulating device (1) according to Claim 1, wherein the flap (34) is of the drum or sliding flap type.

3. Regulating device (1) according to either of the preceding claims, wherein a shut-off device (14) comprising a set of shut-off flaps (18) capable of pivoting rotatably so that they vary the flow rate of the air stream, is arranged in the flow duct (4) upstream of the cooling unit (6) relative to the flow of the air stream.

4. Regulating device (1) according to Claim 3, wherein the cooling unit (6) is inclined relative to the shut-off device (14).

5. Regulating device (1) according to one of the preceding claims, wherein fins (44) are arranged upstream and/or downstream of the cooling unit (6) relative to the flow of the air stream

6. Regulating device (1) according to Claim 5 considered in combination with Claim 3, wherein the fins (44) extend from the shut-off device (14) as far as the cooling unit (6).

7. Regulating device (1) according to one of the preceding claims, wherein the flow section of the flow duct (4) widens from the inlet (20) to the cooling unit (6) and narrows from the cooling unit (6) to the outlet (22) .

8. Motor vehicle comprising an air inlet (54) and a regulation device (1) for said air inlet (54) according to one of Claims 1 to 7, **characterized in that** the air outlet (22) of the flow duct (4) comprises a discharge duct (24) arranged to convey the air stream toward the outside of the vehicle and a cooling duct (26) arranged to convey the air stream toward the engine compartment (56) of the vehicle.

9. Motor vehicle according to Claim 8, further comprising an additional air inlet (58) and wherein an additional duct (60) connects said additional inlet (58) to the discharge duct (24).
